# EUROPEAN PATENT APPLICATION

(11) **EP 4 645 793 A1**
(43) Date of publication of application: **05.11.2025**
(21) Application number: 23915603.7
(22) Date of filing: 12.09.2023
(51) Int. Cl.: H04L 41/0803

(54) **CONFIGURATION METHOD AND SYSTEM FOR DRIVER CIRCUIT IN OPTICAL MODULE**

(30) Priority: 12.01.2023 CN 202310075029
(71) Applicant: Huawei Technologies Co., Ltd., Shenzhen, Guangdong 518129 (CN)
(72) Inventor: ZHANG, Hui, Shenzhen, Guangdong 518129 (CN); WANG, Xiaodong, Shenzhen, Guangdong 518129 (CN); YU, Fei, Shenzhen, Guangdong 518129 (CN); LIU, Chenjun, Shenzhen, Guangdong 518129 (CN); SUN, Changxing, Shenzhen, Guangdong 518129 (CN)
(74) Representative: Goddar, Heinz J.
(86) International application number: PCT/CN2023/118235
(87) International publication number: WO 2024/148845

(57) **Abstract**

This application relates to a configuration method and system for a drive circuit in an optical module. The method includes: A motherboard obtains port number information of the optical module; determines target link configuration information based on a link configuration information list in the motherboard and the port number information of the optical module, where the link configuration information list includes port numbers of a plurality of ports on the motherboard and link configuration information of the plurality of ports; and sends the target link configuration information to the optical module, so that the optical module configures the drive circuit in the optical module based on the target link configuration information. According to embodiments of this application, the drive circuit in the optical module can be automatically configured. This helps improve configuration efficiency of the drive circuit in the optical module.

## Description

This application claims priority to Chinese Patent Application No. 202310075029.5, filed with the China National Intellectual Property Administration on January 12, 2023 and entitled "CONFIGURATION METHOD AND SYSTEM FOR DRIVE CIRCUIT IN OPTICAL MODULE", which is incorporated herein by reference in its entirety.

### TECHNICAL FIELD

This application relates to the field of communication technologies, and in particular, to a configuration method and system for a drive circuit in an optical module.

### BACKGROUND

An optical module is a communication component used for optical-electrical conversion. A continuous time linear equalizer (Continuous Time Linear Equalizer, CTLE) is usually disposed in the optical module, to improve signal quality of communication between the optical module and a motherboard.

A digital signal processor (Digital Signal Processor, DSP) is disposed in a conventional optical module. The DSP has a powerful digital processing function. For different signal transmission links between a motherboard and the optical module, a digital processing algorithm can be used to adaptively set configuration parameters of a CTLE circuit for different links.

However, power consumption and costs of the DSP are high. Consequently, an optical module without a DSP disposed inside emerges, but this type of optical module cannot adaptively set configuration parameters for different links through the DSP like the conventional optical module. Therefore, for different transmission links between a motherboard and this type of optical module, a configuration parameter of a CTLE circuit needs to be manually set, leading to low efficiency and high likelihood of errors.

### SUMMARY

In view of this, a configuration method and system for a drive circuit in an optical module are proposed.

According to a first aspect, an embodiment of this application provides a configuration method for a drive circuit in an optical module, applied to a motherboard. A port of the motherboard is connected to the optical module. The method includes: obtaining port number information of the optical module; determining target link configuration information based on a link configuration information list in the motherboard and the port number information of the optical module, where the link configuration information list includes port numbers of a plurality of ports on the motherboard and link configuration information of the plurality of ports; and sending the target link configuration information to the optical module, so that the optical module configures the drive circuit in the optical module based on the target link configuration information.

According to this embodiment of this application, the link configuration information list that includes the port numbers of the plurality of ports on the motherboard and the link configuration information corresponding to the plurality of ports is preset in the motherboard. After obtaining port number information of the port to which the optical module is connected, the motherboard may automatically determine, based on the port number information and the link configuration information list, the target link configuration information of the port to which the optical module is connected, and send the target link configuration information to the optical module. The optical module (especially an optical module without a digital signal processor disposed inside) may automatically and standardly configure the drive circuit in the optical module. In this way, the drive circuit in the optical module does not need to be manually configured, thereby improving configuration efficiency of the drive circuit in the optical module, and reducing a likelihood of errors.

According to the first aspect, in a first possible implementation of the configuration method for the drive circuit in the optical module, the link configuration information list further includes link numbers of a plurality of links corresponding to each of the plurality of ports, a filter configuration parameter corresponding to each of the plurality of links, and a signal loss of each link. Link configuration information of each link includes a difference between the signal loss of each link and the corresponding filter configuration parameter.

According to this embodiment of this application, the link configuration information corresponding to each link can be efficiently determined for each link of each of the plurality of ports.

According to the first aspect, in a second possible implementation of the configuration method for the drive circuit in the optical module, the link configuration information list is set in a management circuit of the motherboard, and there is communication between a management circuit of the optical module and the management circuit of the motherboard. Determining the target link configuration information based on the link configuration information list in the motherboard and the port number information of the optical module includes: The management circuit of the motherboard determines the target link configuration information based on the link configuration information list and the port number information. Sending the target link configuration information to the optical module includes: The management circuit of the motherboard sends the target link configuration information to the management circuit of the optical module.

According to this embodiment of this application, the configuration method can be efficiently and automatically performed by using the management circuit of the motherboard. In this way, signal transmission between another circuit (for example, a processing circuit) of the motherboard and the optical module is not affected.

According to the first aspect, in a third possible implementation of the configuration method for the drive circuit in the optical module, obtaining the port number information of the optical module includes: obtaining an in-position signal sent by the port to which the optical module is connected, where the in-position signal indicates the port number information; or determining, by polling the plurality of ports, port number information of the port to which the optical module is connected in the plurality of ports.

According to this embodiment of this application, the motherboard can efficiently and accurately obtain the port number information of the optical module, so that the target link configuration information of the port to which the optical module is connected is subsequently determined based on the port number information.

According to a second aspect, an embodiment of this application provides a configuration method for a drive circuit in an optical module, applied to the optical module. The optical module is connected to a motherboard through a port on the motherboard. The method includes: receiving target link configuration information sent by the motherboard, where the target link configuration information is determined by the motherboard based on port number information of the port to which the optical module is connected and a link configuration information list in the motherboard; and configuring the drive circuit in the optical module based on the target link configuration information.

According to this embodiment of this application, after receiving the target link configuration information sent by the motherboard, the optical module may automatically configure the drive circuit based on the target link configuration information, so that the configured drive circuit can effectively compensate for a signal loss on a signal transmission link between the optical module and the motherboard. In this way, quality of a communication signal transmitted between the motherboard and the optical module is improved, and the drive circuit in the optical module does not need to be manually configured, thereby improving configuration efficiency of the drive circuit in the optical module, and reducing a likelihood of errors.

According to the second aspect, in a first possible implementation of the configuration method for the drive circuit in the optical module, the method further includes: configuring the drive circuit in the optical module based on the target link configuration information and drive circuit configuration information in the optical module.

According to this embodiment of this application, the configured drive circuit not only can effectively compensate for the signal loss on the signal transmission link between the optical module and the motherboard, but also can meet configuration requirements of different optical modules for the drive circuit, thereby further improving quality of the communication signal transmitted between the motherboard and the optical module.

According to the second aspect, in a second possible implementation of the configuration method for the drive circuit in the optical module, the optical module includes a management circuit, and there is communication between the management circuit of the optical module and a management circuit of the motherboard. Receiving the target link configuration information sent by the motherboard includes: The management circuit of the optical module receives the target link configuration information sent by the motherboard. Configuring the drive circuit in the optical module based on the target link configuration information includes: The management circuit of the optical module configures the drive circuit in the optical module based on the target link configuration information.

According to this embodiment of this application, the configuration method can be efficiently and automatically performed by using the management circuit of the optical module. In this way, a function of another circuit of the optical module is not affected, and signal transmission between the optical module and the motherboard is not affected.

According to the second aspect, in a third possible implementation of the configuration method for the drive circuit in the optical module, the link configuration information list includes port numbers of a plurality of ports on the motherboard and link configuration information of the plurality of ports.

According to this embodiment of this application, the drive circuit configured based on the target link configuration information determined based on the link configuration information list can effectively compensate for a signal loss of each link between the optical module and the motherboard.

According to a third aspect, an embodiment of this application provides a configuration system for a drive circuit in an optical module, including a motherboard and the optical module. The optical module is connected to the motherboard through a port on the motherboard. The motherboard is configured to: obtain port number information of the optical module; determine target link configuration information based on a link configuration information list in the motherboard and the port number information of the optical module, where the link configuration information list includes port numbers of a plurality of ports on the motherboard and link configuration information of the plurality of ports; and send the target link configuration information to the optical module. The optical module is configured to: receive the target link configuration information sent by the motherboard, and configure the drive circuit in the optical module based on the target link configuration information.

According to the third aspect, in a first possible implementation of the configuration system for the drive circuit in the optical module, configuring the drive circuit in the optical module based on the target link configuration information includes: configuring the drive circuit in the optical module based on the target link configuration information and drive circuit configuration information in the optical module.

According to the third aspect, in a second possible implementation of the configuration system for the drive circuit in the optical module, the link configuration information list further includes link numbers of a plurality of links corresponding to each of the plurality of ports, a filter configuration parameter corresponding to each of the plurality of links, and a signal loss of each link. Link configuration information of each link includes a difference between the signal loss of each link and the corresponding filter configuration parameter.

According to the third aspect, in a third possible implementation of the configuration system for the drive circuit in the optical module, the motherboard includes a management circuit, the optical module includes a management circuit, the link configuration information list is set in the management circuit of the motherboard, and there is communication between the management circuit of the motherboard and the management circuit of the optical module. The management circuit of the motherboard is configured to: obtain the port number information of the optical module, determine the target link configuration information based on the link configuration information list in the motherboard and the port number information of the optical module, and send the target link configuration information to the optical module. The management circuit of the optical module is configured to: receive the target link configuration information sent by the management circuit of the motherboard, and configure the drive circuit in the optical module based on the target link configuration information.

According to a fourth aspect, an embodiment of this application provides a configuration method for a drive circuit in an optical module, applied to a configuration system. The configuration system includes a motherboard and the optical module, and the optical module is connected to the motherboard through a port on the motherboard. The method includes: The motherboard obtains port number information of the optical module; the motherboard determines target link configuration information based on a link configuration information list in the motherboard and the port number information of the optical module, where the link configuration information list includes port numbers of a plurality of ports on the motherboard and link configuration information of the plurality of ports; the motherboard sends the target link configuration information to the optical module; the optical module receives the target link configuration information sent by the motherboard; and the optical module configures the drive circuit in the optical module based on the target link configuration information.

According to the fourth aspect, in a first possible implementation of the configuration method for the drive circuit in the optical module, configuring the drive circuit in the optical module based on the target link configuration information includes: configuring the drive circuit in the optical module based on the target link configuration information and drive circuit configuration information in the optical module.

According to the fourth aspect, in a second possible implementation of the configuration system for the drive circuit in the optical module, the link configuration information list further includes link numbers of a plurality of links corresponding to each of the plurality of ports, a filter configuration parameter corresponding to each of the plurality of links, and a signal loss of each link. Link configuration information of each link includes a difference between the signal loss of each link and the corresponding filter configuration parameter.

According to the fourth aspect, in a third possible implementation of the configuration system for the drive circuit in the optical module, the motherboard includes a management circuit, the optical module includes a management circuit, the link configuration information list is set in the management circuit of the motherboard, and there is communication between the management circuit of the motherboard and the management circuit of the optical module. That the motherboard obtains the port number information of the optical module includes: The management circuit of the motherboard obtains the port number information of the optical module. That the motherboard determines the target link configuration information based on the link configuration information list in the motherboard and the port number information of the optical module includes: The management circuit of the motherboard determines the target link configuration information based on the link configuration information list and the port number information. That the motherboard sends the target link configuration information to the optical module includes: The management circuit of the motherboard sends the target link configuration information to the management circuit of the optical module. That the optical module receives the target link configuration information sent by the motherboard includes: The management circuit of the optical module receives the target link configuration information sent by the management circuit of the motherboard. That the optical module configures the drive circuit in the optical module based on the target link configuration information includes: The management circuit of the optical module configures the drive circuit in the optical module based on the target link configuration information.

According to a fifth aspect, an embodiment of this application provides a motherboard, including: a processing circuit, configured to perform signal transmission with an optical module through a plurality of links between a port to which the optical module is connected and the processing circuit; a management circuit, configured to: communicate with a management circuit of the optical module, and perform the configuration method for the drive circuit in the optical module according to the first aspect; and a printed circuit board, configured to carry the processing circuit and the management circuit.

According to a sixth aspect, an embodiment of this application provides an optical module, including a drive circuit, a transmitter optical circuit, a receiver optical circuit, a signal amplification circuit, and a management circuit. The management circuit is configured to: communicate with a management circuit of a motherboard, and perform the configuration method for the drive circuit in the optical module according to the second aspect.

These aspects and other aspects of this application are more concise and more comprehensive in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain principles of this application.
FIG. 1 is a diagram of a signal transmission link and CTLE circuit compensation according to an embodiment of this application;
FIG. 2 is a diagram of a CTLE circuit compensation process according to an embodiment of this application;
FIG. 3 is a diagram of a conventional optical module according to a related technology;
FIG. 4 is a diagram of an optical module without a DSP disposed inside according to an embodiment of this application;
FIG. 5(a), FIG. 5(b), FIG. 5(c), and FIG. 5(d) each are a diagram of an application scenario according to an embodiment of this application;
FIG. 6 is a flowchart of a configuration method for a drive circuit in an optical module according to an embodiment of this application;
FIG. 7 is a flowchart of a configuration method for a drive circuit in an optical module according to an embodiment of this application;
FIG. 8 is a diagram of a configuration system for a drive circuit in an optical module according to an embodiment of this application;
FIG. 9 is a flowchart of a configuration method for a drive circuit in an optical module according to an embodiment of this application;
FIG. 10 is a diagram of a change trend of a bit error rate according to an embodiment of this application;
FIG. 11 is a diagram of a change trend of a bit error rate according to an embodiment of this application; and
FIG. 12 is a diagram of a change trend of a bit error rate according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment, or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some examples, methods, manners, elements, and circuits that are well-known to a person skilled in the art are not described in detail, so that a subject matter of this application is highlighted.

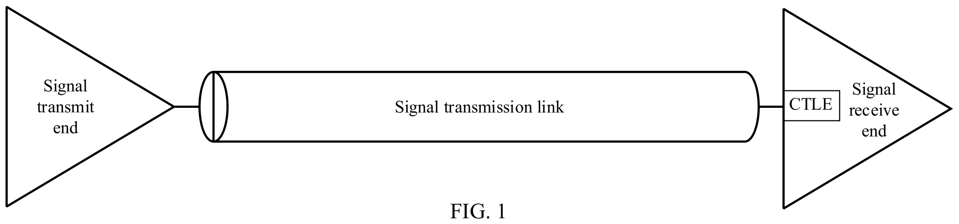

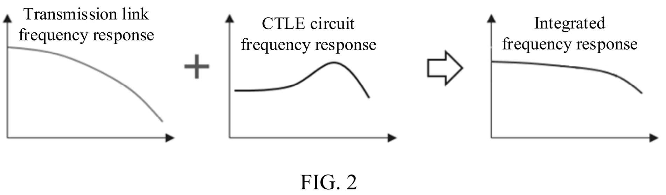

FIG. 1 is a diagram of a signal transmission link and CTLE circuit compensation according to an embodiment of this application. As shown in FIG. 1, a signal is transmitted between a signal transmit end and a signal receive end through a signal transmission link. A signal loss is generated (for example, a bit error occurs) on the signal transmission link. Therefore, a CTLE circuit is disposed on the signal receive end to compensate for the signal loss on the signal transmission link, so that quality of a communication signal received by the signal receive end can be improved. As shown in FIG. 2, an integrated frequency response obtained by combining a signal transmission link frequency response with a CTLE circuit frequency response is more smooth than the signal transmission link frequency response. This means that the signal loss on the signal transmission link can be compensated to some extent through the CTLE circuit.

It may be learned that the CTLE circuit is an analog circuit, and includes pluralities of bipolar junction transistors (Bipolar Junction Transistors, BJTs), resistors, capacitors, and inductors. Power consumption generated by the analog circuit is small. Signal losses generated on different signal transmission links are different. Therefore, different configuration parameters of the CTLE circuit may be set for the different signal transmission links. The configuration parameters may include a compensation value required for configuring the CTLE circuit.

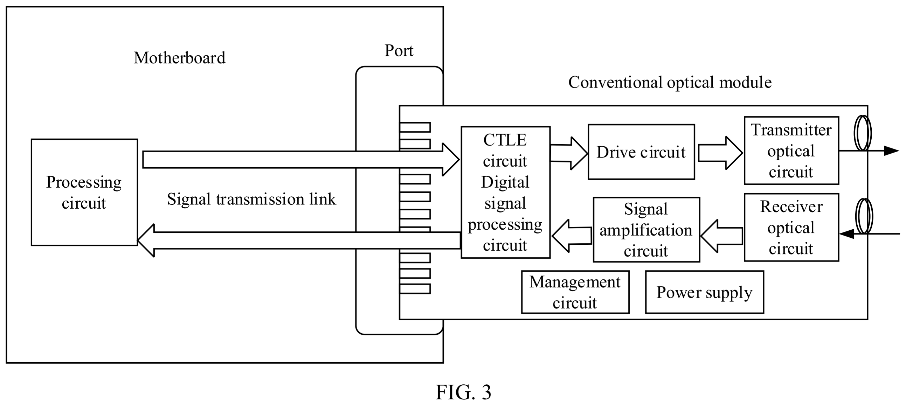

FIG. 3 is a diagram of a conventional optical module according to a related technology. As shown in FIG. 3, the conventional optical module may perform signal transmission with a processing circuit disposed on a motherboard through a signal transmission link. The processing circuit may include, for example, an integrated circuit such as an application-specific integrated circuit (Application-Specific Integrated Circuit, ASIC) having a signal processing capability. The conventional optical module shown in FIG. 3 may include components such as a digital signal processing circuit, a drive circuit, a transmitter optical circuit, a receiver optical circuit, a signal amplification circuit, a management circuit, and a power supply.

The digital signal processing circuit, namely, a digital signal processor (Digital Signal Processor, DSP), may specifically include an optical digital signal processor (Optical Digital Signal Processor, oDSP). The digital signal processing circuit includes a CTLE circuit, and the digital signal processing circuit may adaptively set a configuration parameter of the CTLE circuit. Drive circuit (Driver, DRV). The transmitter optical circuit includes a transmitter optical sub-assembly (Transmitter Optical Sub-Assembly, TOSA), configured to convert an electrical signal into an optical signal. The receiver optical circuit includes a receiver optical sub-assembly (Receiver Optical Sub-Assembly, ROSA), configured to convert an optical signal into an electrical signal. The signal amplification circuit may include a component such as a transimpedance amplifier (Trans-impedance Amplifier, TIA), configured to amplify a voltage or power of an input signal. The management circuit may include a component such as a microcontroller unit (Microcontroller Unit, MCU) having operation and storage capabilities.

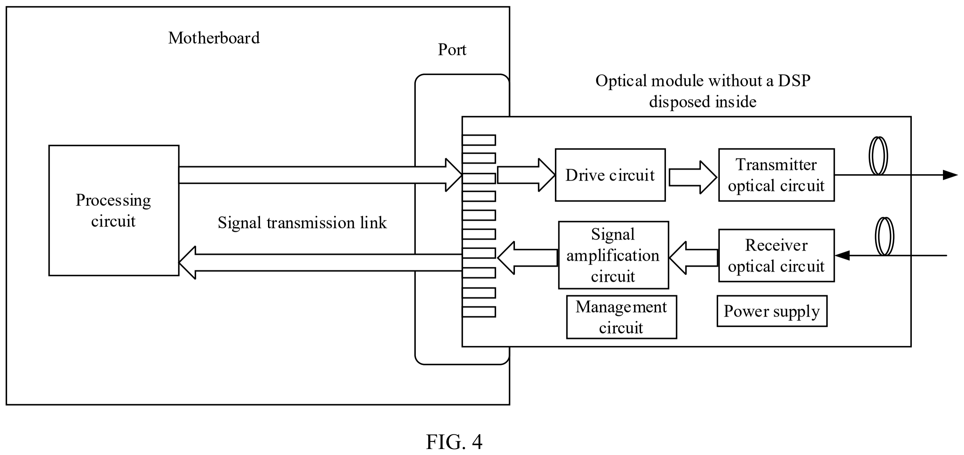

The digital signal processor DSP needs to be used in such a conventional optical module, and power consumption and costs of the DSP are high. Therefore, currently, there is an optical module without a DSP disposed inside. For example, as shown in FIG. 4, there is an optical module without a DSP disposed inside. The optical module includes components such as a drive circuit, a transmitter optical circuit, a receiver optical circuit, a signal amplification circuit, a management circuit, and a power supply. The drive circuit includes an equalizer (Equalizer, EQ) circuit having a signal compensation capability (namely, an equalization capability). The equalizer circuit includes a CTLE circuit. However, this type of optical module without a DSP disposed inside cannot adaptively set configuration parameters of the drive circuit for different transmission links through the DSP like the conventional optical module. Therefore, for different transmission links between a motherboard and the optical module, a configuration parameter of the drive circuit needs to be manually set, leading to low efficiency and high likelihood of errors.

In view of this, embodiments of this application provide a configuration method and system for a drive circuit in an optical module. For an optical module without a DSP disposed inside, the drive circuit in the optical module can be automatically configured, and configuration parameters of the drive circuit do not need to be manually set for different links, thereby improving configuration efficiency of the drive circuit and reducing a likelihood of errors.

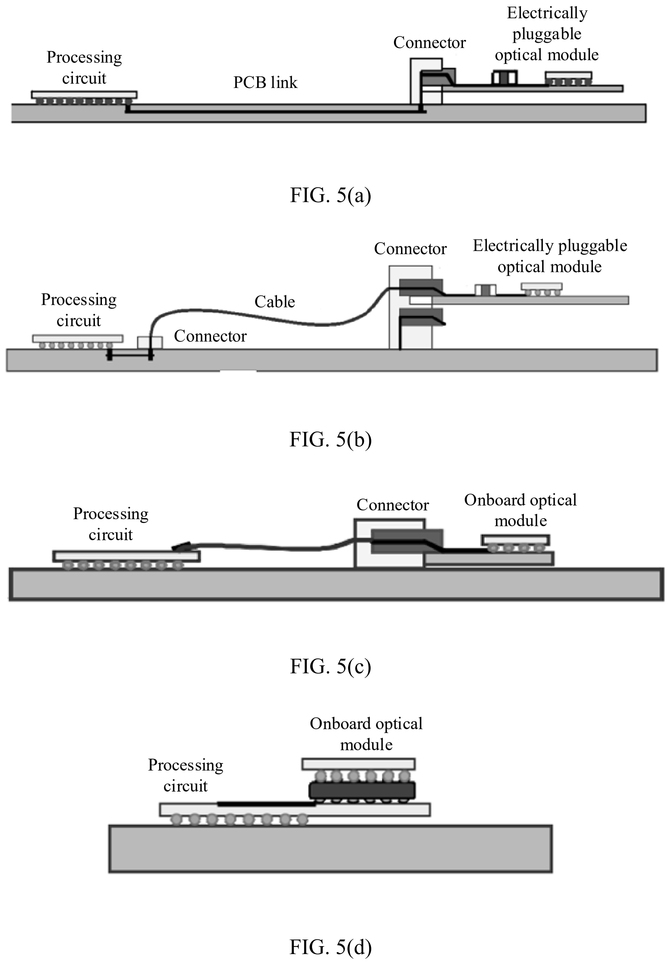

For example, FIG. 5(a), FIG. 5(b), FIG. 5(c), and FIG. 5(d) each are a diagram of an application scenario according to an embodiment of this application. Each of optical modules shown in FIG. 5(a) and FIG. 5(b) may be an electrically pluggable optical module without a DSP disposed inside. After the electrically pluggable optical module shown in FIG. 5(a) is plugged into a connector on a motherboard of a printed circuit board PCB, signal transmission may be performed with a processing circuit on the motherboard through a PCB link on the motherboard of the PCB. After being plugged into a connector (connector) on a PCB, the electrically pluggable optical module shown in FIG. 5(b) may be connected to a connector at one side of a processing circuit on a motherboard through a cable, to perform signal transmission. The PCB link and the cable are both signal transmission links. For brevity, the signal transmission link is briefly referred to as a link below.

It should be understood that a model of the electrically pluggable optical module without a DSP disposed inside is not limited in embodiments of the present disclosure. The electrically pluggable optical module may include, for example, a quad small form-factor pluggable (Quad Small Form-factor Pluggable, QSFP) optical module, a quad small form-factor pluggable-double density (Quad Small Form-factor Pluggable-Double Density, QSFP-DD) optical module, and an octal small form-factor pluggable (Octal Small Form-factor Pluggable, OSFP) optical module.

An optical module shown in FIG. 5(c) may be an onboard optical module (On-Board Optics, OBO) without a DSP disposed inside. This type of onboard optical module may also be referred to as a near-packaged optical module (Near-Packaged Optics, NPO). The near-packaged optical module is not pluggable and is directly connected to a processing circuit through a connector and a cable. Signal transmission may be performed between the onboard optical module and the processing circuit of a motherboard through the cable. An optical module shown in FIG. 5(d) may be another onboard optical module without a DSP disposed inside. This type of onboard optical module may be referred to as a co-packaged optical module (Co-Packaged Optics, CPO). The co-packaged optical module and a processing circuit of a motherboard are co-packaged on a chip.

After each of various optical modules without a DSP disposed inside in FIG. 5(a), FIG. 5(b), FIG. 5(c), and FIG. 5(d) is connected to the motherboard through a port of the motherboard, the motherboard may obtain port number information of the optical module. The port number information may indicate a port number of the port to which the optical module is connected. A link configuration information list is set in the motherboard, and includes port numbers of a plurality of ports and link configuration information of the plurality of ports. The motherboard may determine target link configuration information of the optical module based on the link configuration information list and the port number information, and send the target link configuration information to the optical module. The optical module may configure the drive circuit based on the target link configuration information sent by the motherboard.

It should be noted that the configuration method and system for the drive circuit in the optical module in embodiments of this application may be applied to various optical modules without a DSP disposed inside. A structure, a model, a packaging manner, and the like of the optical module are not limited in embodiments of this application. Any optical module without a DSP disposed inside may automatically configure the drive circuit in the optical module by using the configuration method in embodiments of this application, thereby avoiding low-efficiency and error-prone cases caused by manual configuration.

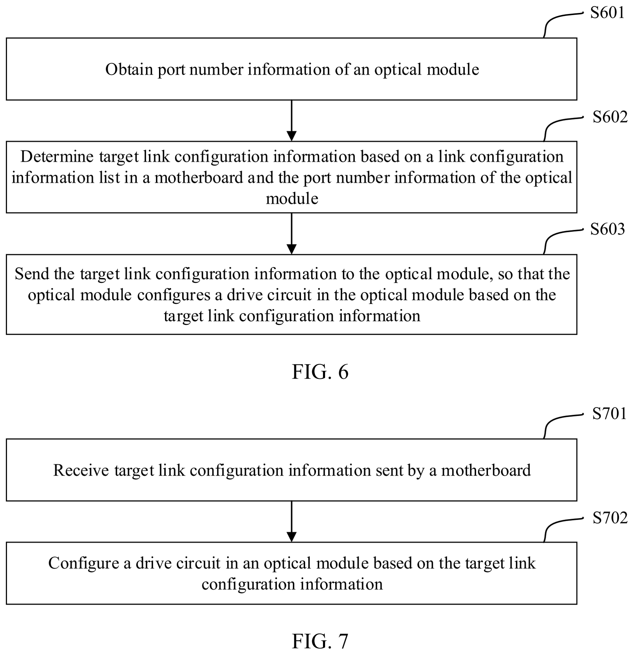

The following describes, with reference to FIG. 6 and FIG. 7, a configuration method for a drive circuit in an optical module according to an embodiment of this application.

FIG. 6 is a flowchart of a configuration method for a drive circuit in an optical module according to an embodiment of this application. The configuration method may be applied to a motherboard. For example, a management circuit of the motherboard may perform the configuration method. A port of the motherboard is connected to the optical module. The optical module may be an optical module without a digital signal processor DSP disposed inside. As shown in FIG. 6, the configuration method includes the following steps.

Step S601: Obtain port number information of the optical module.

Step S602: Determine target link configuration information based on a link configuration information list in the motherboard and the port number information of the optical module, where the link configuration information list includes port numbers of a plurality of ports on the motherboard and link configuration information of the plurality of ports.

Step S603: Send the target link configuration information to the optical module, so that the optical module configures the drive circuit in the optical module based on the target link configuration information.

The motherboard may include, for example, at least a processing circuit and a management circuit. The processing circuit may include an integrated circuit such as an application-specific integrated circuit ASIC having a signal processing capability. The management circuit may include, for example, a microcontroller unit MCU or an erasable programmable logic device (Erasable Programmable Logic Device, EPLD). There may be a plurality of ports on the motherboard. The optical module may be connected to the motherboard through any port. The optical module may be an electrically pluggable optical module without a digital signal processor DSP disposed inside, or may be an onboard optical module without a digital signal processor DSP disposed inside.

During actual application, there may be a signal transmission service between the processing circuit in the motherboard and the optical module, and signal transmission may be performed between the processing circuit and the optical module through a link such as a PCB link or a cable. After the optical module is connected to the motherboard through the port, the motherboard may obtain port number information of the port to which the optical module is connected, determine the target link configuration information based on the preset link configuration information list and the port number information, and send the target link configuration information to the optical module.

The link configuration information includes information used to configure the drive circuit in the optical module, for example, may include but is not limited to a recommended compensation value of an equalizer circuit in the drive circuit. Optionally, the link configuration information list further includes link numbers of a plurality of links corresponding to each of the plurality of ports, a filter configuration parameter corresponding to each of the plurality of links, and a signal loss of each link. Link configuration information of each link includes a difference between the signal loss of each link and the corresponding filter configuration parameter. In this manner, the link configuration information corresponding to each link can be efficiently determined for each link of each of the plurality of ports. For example, Table 1 shows a link configuration information list provided in an embodiment of this application.

**Table 1: Link configuration information list**

| Module port number | Link number | Filter configuration parameter of a Tx FIR filter | Signal loss (dB) | Link configuration information |
|---|---|---|---|---|
| PORT1 | Lane1 | 4 | 9 | 5 |
| | Lane2 | 4 | 8 | 4 |
| | Lane3 | 4 | 8 | 4 |
| | Lane4 | 5 | 10 | 5 |
| PORT2 | Lane1 | 6 | 12 | 6 |
| | Lane2 | 6 | 13 | 7 |
| | Lane3 | 5 | 11 | 6 |
| | Lane4 | 5 | 11 | 6 |
| ... | ... | ... | ... | ... |

The link configuration information list shown in Table 1 may be for a four-channel optical module. To be specific, four links (or four channels) may be used to transmit signals concurrently, and each link corresponds to a filter configuration parameter of a Tx FIR filter of the motherboard (where the filter configuration parameter includes a signal compensation value corresponding to the FIR filter), a signal loss, and link configuration information.

The signal loss of each link may include, for example, at least a bit error amount of each link. Signal loss information of different links is different. The Tx FIR filter may be understood as a finite impulse response (Finite Impulse Response, FIR) filter (filter) of a signal transmit end (Tx). The Tx FIR filter may preset specific signal compensation for each link. In other words, the Tx FIR filter may have configured a signal compensation value. However, this may not compensate for an entire signal loss generated by each link. Therefore, the drive circuit in the optical module needs to further compensate for the signal loss.

As described above, the link configuration information of each link includes the difference between the signal loss of each link and the corresponding filter configuration parameter. Therefore, there is a linear correspondence between the link configuration information corresponding to each link and the signal loss of each link as well as the filter configuration parameter corresponding to each link. The filter configuration parameter of the Tx FIR filter may be a value customized by a skilled person according to an actual requirement, and the signal loss of each link may be information obtained by a skilled person by performing experimental detection on each link on the motherboard. Therefore, after a filter configuration parameter of the Tx FIR filter for any link and the signal loss corresponding to each link are learned, the link configuration information corresponding to the link may be obtained.

Based on this, the target link configuration information may include the difference between the signal loss of each of the plurality links between the optical module and the motherboard and the corresponding filter configuration parameter, and the target link configuration information may be used as a configuration parameter of the drive circuit to configure the drive circuit in the optical module.

In a possible implementation, the link configuration information list may be preset in the management circuit of the motherboard, and there is communication between the management circuit of the motherboard and a management circuit of the optical module. Based on this, the management circuit of the motherboard may perform the configuration method in this embodiment of this application. To be specific, the management circuit of the motherboard may obtain the port number information of the optical module. Determining the target link configuration information based on the link configuration information list in the motherboard and the port number information of the optical module includes: The management circuit of the motherboard determines the target link configuration information based on the link configuration information list and the port number information. Sending the target link configuration information to the optical module includes: The management circuit of the motherboard sends the target link configuration information to the management circuit of the optical module, so that the management circuit of the optical module configures the drive circuit in the optical module based on the target link configuration information. In this manner, the configuration method can be efficiently and automatically performed by using the management circuit of the motherboard. In this way, signal transmission between another circuit (for example, a processing circuit) of the motherboard and the optical module is not affected.

Optionally, the management circuit of the motherboard and the management circuit of the optical module may perform communication connection through a management bus (namely, a management interface). Based on this, the management circuit of the motherboard may send the target link configuration information required by the optical module to the management circuit of the optical module through the management bus. The management bus may be an interface channel for information transmission according to a communication protocol. A software communication protocol may be added between the management circuit of the optical module and the management circuit of the motherboard, to implement communication between the motherboard and the optical module.

During actual application, after the optical module is connected to the motherboard through the port, for example, after the optical module is plugged into a connector of the motherboard, the management circuit of the optical module may communicate with the management circuit of the motherboard through a management bus on the motherboard. In this way, after determining the target link configuration information based on the link configuration information list and the port number information, the management circuit of the motherboard may send the target link configuration information to the management circuit of the optical module through the management bus. For example, if a port number of the port to which the optical module is connected is PORT2 in Table 1, the management circuit of the motherboard may send four pieces of link configuration information "Lane1:6, Lane2:7, Lane3:6, Lane4:6" (namely, the target link configuration information) corresponding to four links under PORT2 in Table 1 to the management circuit of the optical module, so that the management circuit of the optical module configures the drive circuit in the optical module based on the four pieces of link configuration information.

It should be understood that a specific implementation in which the optical module configures the drive circuit based on the target link configuration information is not limited in this embodiment of this application. For example, the target link configuration information may be directly used as a configuration parameter to configure the drive circuit; or the target link configuration information may be adjusted according to a configuration requirement of the optical module for the drive circuit, and the adjusted target link configuration information is used as a configuration parameter to configure the drive circuit. This is not limited in this embodiment of this application.

During actual application, after any port of the motherboard is connected to the optical module, the port connected to the optical module may send an in-position signal to the management circuit of the motherboard, to indicate the port number information of the port to which the optical module is connected. In a possible implementation, obtaining the port number information of the optical module may include: obtaining the in-position signal sent by the port to which the optical module is connected. The in-position signal indicates the port number information. In this manner, the motherboard can efficiently and accurately obtain the port number information of the optical module, so that the target link configuration information of the port to which the optical module is connected is subsequently determined based on the port number information.

Considering that some ports are not capable of sending an in-position signal, in a possible implementation, obtaining the port number information of the optical module may further include: determining, by polling the plurality of ports, the port number information of the port to which the optical module is connected in the plurality of ports. The management circuit of the motherboard may periodically send query information to each port to implement polling of the plurality of ports. After the optical module is connected to any port, the query information is received, and the optical module returns a response signal based on the query information. This represents that there is an optical module on the port, and the optical module can communicate with the motherboard. In this case, the management circuit of the motherboard may determine the port number information of the optical module based on the response information. In this manner, the motherboard can efficiently and accurately obtain the port number information of the optical module, so that the target link configuration information of the port to which the optical module is connected is subsequently determined based on the port number information.

According to this embodiment of this application, the link configuration information list that includes the port numbers of the plurality of ports on the motherboard and the link configuration information corresponding to the plurality of ports is preset in the motherboard. After obtaining the port number information of the port to which the optical module is connected, the motherboard may automatically determine, based on the port number information and the link configuration information list, the target link configuration information of the port to which the optical module is connected, and send the target link configuration information to the optical module. The optical module (especially an optical module without a digital signal processor disposed inside) may automatically and standardly configure the drive circuit in the optical module. In this way, the drive circuit in the optical module does not need to be manually configured, thereby improving configuration efficiency of the drive circuit in the optical module, and reducing a likelihood of errors.

FIG. 7 is a flowchart of a configuration method for a drive circuit in an optical module according to an embodiment of this application. The configuration method may be applied to the optical module. For example, a management circuit of the optical module may perform the configuration method. The optical module may be connected to a motherboard through a port on the motherboard. The optical module may be an optical module without a digital signal processor DSP disposed inside, or the like. As shown in FIG. 7, the configuration method includes the following steps.

Step S701: Receive target link configuration information sent by the motherboard, where the target link configuration information is determined by the motherboard based on port number information of the port to which the optical module is connected and a link configuration information list in the motherboard.

Step S702: Configure the drive circuit in the optical module based on the target link configuration information.

The target link configuration information may be determined based on the port number information of the port to which the optical module is connected and the link configuration information list in the motherboard and with reference to the implementation of step S602 in embodiments of this application. Details are not described herein again.

As described above, the optical module includes the management circuit, and there is communication between the management circuit of the optical module and a management circuit of the motherboard. In a possible implementation, the management circuit of the optical module may perform the configuration method in this embodiment of this application. To be specific, receiving the target link configuration information sent by the motherboard may include: The management circuit of the optical module receives the target link configuration information sent by the motherboard; and configuring the drive circuit in the optical module based on the target link configuration information includes: the management circuit of the optical module configures the drive circuit in the optical module based on the target link configuration information. In this manner, the configuration method can be efficiently and automatically performed by using the management circuit of the optical module. In this way, a function of another circuit of the optical module is not affected, and signal transmission between the optical module and the motherboard is not affected.

As described above, the drive circuit includes an equalizer (Equalizer, EQ) circuit having a signal compensation capability (namely, an equalization capability), and the equalizer circuit includes a CTLE circuit. That the management circuit of the optical module configures the drive circuit in the optical module based on the target link configuration information may include, for example: The management circuit of the optical module sends the target link configuration information to the drive circuit as a configuration parameter; and after receiving the target link configuration information, the drive circuit may complete configuration of the equalizer circuit in the drive circuit.

It should be understood that optical modules of different manufacturers and different models may have configuration requirements for internal drive circuits, and internal configuration requirements of the optical modules of the different manufacturers or the different models may be different. This depends on features of the optical modules. For example, if a signal loss from a contact finger to the drive circuit in the optical module exceeds 2 dB defined in a standard, or if the optical module needs to compensate for bandwidth performance from the drive circuit to a transmitter optical sub-assembly TOSA, drive circuit configuration information may be preset for the drive circuit according to the configuration requirements of the optical modules, or a specific configuration parameter may be set for the equalizer circuit in the drive circuit in the optical module. A specific value of the drive circuit configuration information is not limited in this embodiment of this application.

In a possible implementation, the method further includes: configuring the drive circuit in the optical module based on the target link configuration information and the drive circuit configuration information in the optical module. In this manner, the configured drive circuit not only can effectively compensate for a signal loss on a signal transmission link between the optical module and the motherboard, but also can meet configuration requirements of different optical modules for the drive circuit, thereby further improving quality of a communication signal transmitted between the motherboard and the optical module.

The drive circuit configuration information may include different configuration parameters that are set for different links between the optical module and the motherboard, for example, a drive circuit configuration information list shown in Table 2. As shown in Table 2, different configuration parameters may be respectively set for four links between the optical module and the motherboard. Certainly, a same configuration parameter may alternatively be set for different links between the optical module and the motherboard. This may be specifically set according to a configuration requirement of the optical module for the drive circuit. This is not limited in this embodiment of this application. It should be understood that a manufacturer of the optical module may preset the drive circuit configuration information in the management circuit of the optical module. In this way, after receiving the target link configuration information sent by the motherboard, the management circuit of the optical module may configure the drive circuit in the optical module based on the target link configuration information and the drive circuit configuration information in the optical module.

**Table 2: Drive circuit configuration information list**

| Link number | Configuration parameter of the drive circuit |
|---|---|
| Lane1 | 1.5 |
| Lane2 | 1.5 |
| Lane3 | 2 |
| Lane4 | 2 |

As described above, the target link configuration information may include at least link configuration information of each of a plurality of links between the optical module and the motherboard. The link configuration information of each link includes a difference between a link loss of each link and a corresponding filter parameter. The difference may be used as a recommended compensation value of the equalizer circuit in the drive circuit, to configure the equalizer circuit in the drive circuit. In a possible implementation, configuring the drive circuit in the optical module based on the target link configuration information and the drive circuit configuration information in the optical module may include: combining the target link configuration information and the drive circuit configuration information to obtain target configuration information, and configuring the drive circuit in the optical module based on the target configuration information.

Combining the target link configuration information and the drive circuit configuration information to obtain the target configuration information may include: adding the target link configuration information and the drive circuit configuration information to obtain the target configuration information. The target configuration information may be used as a target compensation value of the equalizer circuit in the drive circuit, to configure the equalizer circuit in the drive circuit. This manner may be understood as: adjusting the target link configuration information based on the drive circuit configuration information in the optical module to obtain the target configuration information, and configuring the drive circuit based on the target configuration information. For example, it is assumed that link configuration information corresponding to a specific link between the optical module and the motherboard is 8, and drive circuit configuration information that corresponding to the link in the optical module is 1.5. Then, 9.5 obtained by adding 8 and 1.5 may be used as the target configuration information.

As described above, the optical module includes the management circuit. Configuring the drive circuit in the optical module based on the target configuration information may include, for example: The management circuit of the optical module sends the target configuration information to the drive circuit; and after receiving the target configuration information, the drive circuit may complete configuration of the equalizer circuit in the drive circuit.

According to this embodiment of this application, after receiving the target link configuration information sent by the motherboard, the optical module may automatically configure the drive circuit based on the target link configuration information, so that the configured drive circuit can effectively compensate for a signal loss on a signal transmission link between the optical module and the motherboard. In this way, quality of a communication signal transmitted between the motherboard and the optical module is improved, and the drive circuit in the optical module does not need to be manually configured, thereby improving configuration efficiency of the drive circuit in the optical module, and reducing a likelihood of errors.

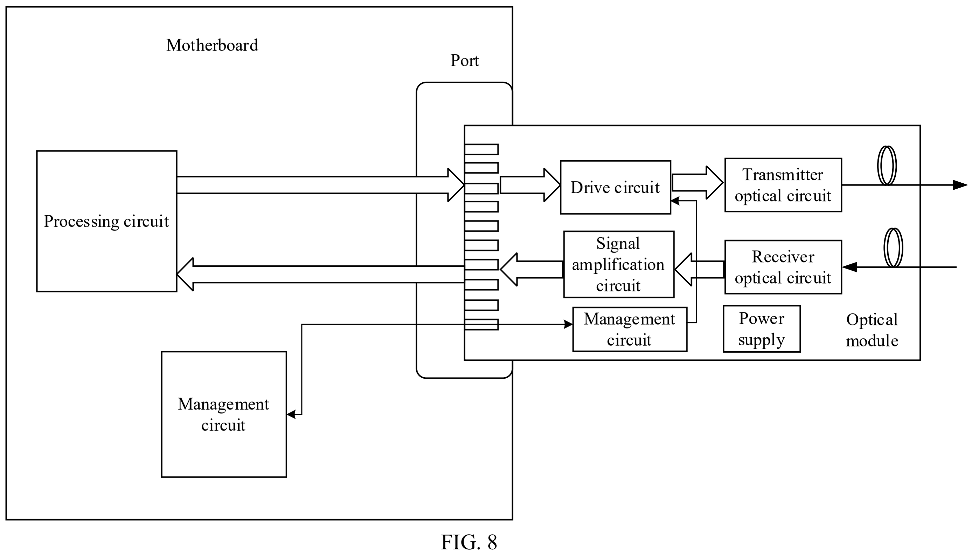

FIG. 8 is a diagram of a configuration system for a drive circuit in an optical module according to an embodiment of this application. As shown in FIG. 8, the configuration system includes:
a motherboard and the optical module, where the optical module is connected to the motherboard through a port on the motherboard.

The motherboard is configured to: obtain port number information of the optical module, determine target link configuration information based on a link configuration information list in the motherboard and the port number information of the optical module. The link configuration information list includes port numbers of a plurality of ports on the motherboard and link configuration information of the plurality of ports, and send the target link configuration information to the optical module.

The optical module is configured to: receive the target link configuration information sent by the motherboard, and configure the drive circuit in the optical module based on the target link configuration information.

As shown in FIG. 8, the motherboard may include, for example, at least a processing circuit and a management circuit. The processing circuit may include an integrated circuit such as an application-specific integrated circuit ASIC having a signal processing capability. The management circuit may include, for example, a component having operation and storage capabilities, such as a microcontroller unit MCU or an erasable programmable logic device (Erasable Programmable Logic Device, EPLD). There may be a plurality of ports on the motherboard. The optical module may be connected to the motherboard through any port. The optical module may be an optical module without a digital signal processor DSP disposed inside.

As shown in FIG. 8, the optical module may include components such as the drive circuit, a transmitter optical circuit, a receiver optical circuit, a signal amplification circuit, a management circuit, and a power supply. The drive circuit may include an equalizer circuit having a signal compensation capability (namely, an equalization capability). The equalizer circuit may include, for example, a CTLE circuit. The transmitter optical circuit includes a transmitter optical sub-assembly TOSA, configured to convert an electrical signal into an optical signal. The receiver optical circuit includes a receiver optical sub-assembly ROSA, configured to convert an optical signal into an electrical signal. The signal amplification circuit may include a component such as a transimpedance amplifier TIA, configured to amplify a voltage or power of an input signal. The control unit may include a component such as a microcontroller unit MCU or an erasable programmable logic device EPLD having operation and storage capabilities.

During actual application, there may be a signal transmission service between the processing circuit in the motherboard and the optical module, and signal transmission may be performed between the processing circuit and the optical module through a link such as a PCB link or a cable. After the optical module is connected to the motherboard through the port, the management circuit of the motherboard may obtain a port number of the port to which the optical module is connected. The link configuration information list may be set in the management circuit. After obtaining the port number information of the port to which the optical module is connected, the management circuit of the motherboard may determine the target link configuration information based on the link configuration information list and the port number information, and send the target link configuration information to the optical module.

As described above, the motherboard includes the management circuit, and the optical module includes the management circuit. In a possible implementation, the link configuration information list is set in the management circuit of the motherboard, and there is communication between the management circuit of the motherboard and the management circuit of the optical module. That the motherboard obtains the port number information of the optical module includes: The management circuit of the motherboard obtains the port number information of the optical module. That the motherboard determines the target link configuration information based on the link configuration information list in the motherboard and the port number information of the optical module includes: The management circuit of the motherboard determines the target link configuration information based on the link configuration information list and the port number information of the optical module. That the motherboard sends the target link configuration information to the optical module includes: The management circuit of the motherboard sends the target link configuration information to the management circuit of the optical module. That the optical module receives the target link configuration information sent by the motherboard includes: The management circuit of the optical module receives the target link configuration information sent by the management circuit of the motherboard. That the optical module configures the drive circuit in the optical module based on the target link configuration information includes: The management circuit of the optical module configures the drive circuit in the optical module based on the target link configuration information. In this manner, steps that need to be separately performed by the optical module and the motherboard in the configuration system can be efficiently and automatically performed by using the management circuit of the optical module and the management circuit of the motherboard. In this way, a function of another circuit of the optical module is not affected, and signal transmission between the optical module and the motherboard is not affected.

The link configuration information includes information used to configure the drive circuit in the optical module, for example, may include but is not limited to a recommended compensation value of the equalizer circuit in the drive circuit. Optionally, the link configuration information list further includes link numbers of a plurality of links corresponding to each of the plurality of ports, a filter configuration parameter corresponding to each of the plurality of links, and a signal loss of each link. Link configuration information of each link includes a difference between the signal loss of each link and the corresponding filter configuration parameter. In this manner, the link configuration information corresponding to each link can be efficiently determined for each link of each of the plurality of ports.

As described above, the link configuration information list may be preset in the management circuit of the motherboard, and the management circuit of the motherboard may perform communication connection with the management circuit of the optical module through a management bus (namely, a management interface). In this way, the management circuit of the motherboard may transmit the target link configuration information required by the optical module to the optical module through the management bus. The management bus may be an interface channel for information transmission according to a communication protocol. A software communication protocol may be added between the management circuit of the optical module and the management circuit of the motherboard, to transfer the target link configuration information between the motherboard and the optical module.

In a possible implementation, the optical module may directly use the target link configuration information as a configuration parameter to configure the drive circuit. Specifically, the equalizer circuit in the drive circuit may be configured; or the target link configuration information may be adjusted according to a configuration requirement of the optical module for the drive circuit, and the adjusted target link configuration information is used as a configuration parameter to configure the drive circuit. This is not limited in this embodiment of this application.

As described above, the management circuit of the optical module configures the drive circuit in the optical module based on the target link configuration information. The management circuit of the optical module may directly send the target link configuration information as the configuration parameter to the drive circuit. After receiving the target link configuration information, the drive circuit may complete configuration of the equalizer circuit in the drive circuit.

In a possible implementation, configuring the drive circuit in the optical module based on the target link configuration information includes: configuring the drive circuit in the optical module based on the target link configuration information and drive circuit configuration information in the optical module. In this manner, the configured drive circuit not only can effectively compensate for a signal loss on a signal transmission link between the optical module and the motherboard, but also can meet configuration requirements of different optical modules for the drive circuit, thereby further improving quality of a communication signal transmitted between the motherboard and the optical module.

As described above, optical modules of different manufacturers and different models may have configuration requirements for internal drive circuits, and internal configuration requirements of the optical modules of the different manufacturers or the different models may be different. This depends on features of the optical modules. For example, if a signal loss from a contact finger to the drive circuit in the optical module exceeds 2 dB defined in a standard, or if the optical module needs to compensate for bandwidth performance from the drive circuit to the transmitter optical sub-assembly TOSA, the drive circuit configuration information may be preset for the drive circuit according to the configuration requirements of the optical modules, or a specific configuration parameter may be set for the equalizer circuit in the drive circuit in the optical module. A specific value of the drive circuit configuration information is not limited in this embodiment of this application.

The drive circuit configuration information may include different configuration parameters that are set for different links between the optical module and the motherboard, or may include a same configuration parameter that is set for different links between the optical module and the motherboard. This may be specifically set according to a configuration requirement of the optical module for the drive circuit. This is not limited in this embodiment of this application. It should be understood that a manufacturer of the optical module may preset the drive circuit configuration information in the management circuit of the optical module. In this way, after receiving the target link configuration information sent by the motherboard, the management circuit of the optical module may configure the drive circuit in the optical module based on the target link configuration information and the drive circuit configuration information in the optical module.

As described above, the target link configuration information may include at least link configuration information of each of a plurality of links between the optical module and the motherboard. The link configuration information of each link includes a difference between a link loss of each link and a corresponding filter parameter. The difference may be used as a recommended compensation value of the equalizer circuit in the drive circuit, to configure the equalizer circuit in the drive circuit. In a possible implementation, configuring the drive circuit in the optical module based on the target link configuration information and the drive circuit configuration information in the optical module may include: combining the target link configuration information and the drive circuit configuration information to obtain target configuration information, and configuring the drive circuit in the optical module based on the target configuration information.

Combining the target link configuration information and the drive circuit configuration information to obtain the target configuration information may include: adding the target link configuration information and the drive circuit configuration information to obtain the target configuration information. The target configuration information may be used as a target compensation value of the equalizer circuit in the drive circuit, to configure the equalizer circuit in the drive circuit. This manner may be understood as: adjusting the target link configuration information based on the drive circuit configuration information in the optical module to obtain the target configuration information, and configuring the drive circuit based on the target configuration information.

As described above, the optical module includes the management circuit. Configuring the drive circuit in the optical module based on the target configuration information may include, for example: The management circuit of the optical module sends the target configuration information to the drive circuit; and after receiving the target configuration information, the drive circuit may complete configuration of the equalizer circuit in the drive circuit.

According to this embodiment of this application, the link configuration information list that includes the port numbers of the plurality of ports on the motherboard and the link configuration information corresponding to the plurality of ports is preset in the motherboard. After obtaining the port number information of the port to which the optical module is connected, the motherboard may automatically determine, based on the port number information and the link configuration information list, the target link configuration information of the port to which the optical module is connected, and send the target link configuration information to the optical module. The optical module may automatically configure the drive circuit based on the target link configuration information, that is, automatically and standardly configure the drive circuit in the optical module. In this way, the drive circuit in the optical module does not need to be manually configured, thereby improving configuration efficiency of the drive circuit in the optical module, and reducing a likelihood of errors.

It should be noted that the configuration system shown in FIG. 8 is a possible implementation provided in embodiments of this application. Actually, a person skilled in the art may customize a component included in the motherboard and a component included in the optical module, provided that method steps that need to be separately performed by the motherboard and the optical module in the configuration system in embodiments of this application can be implemented. This is not limited in this embodiment of this application.

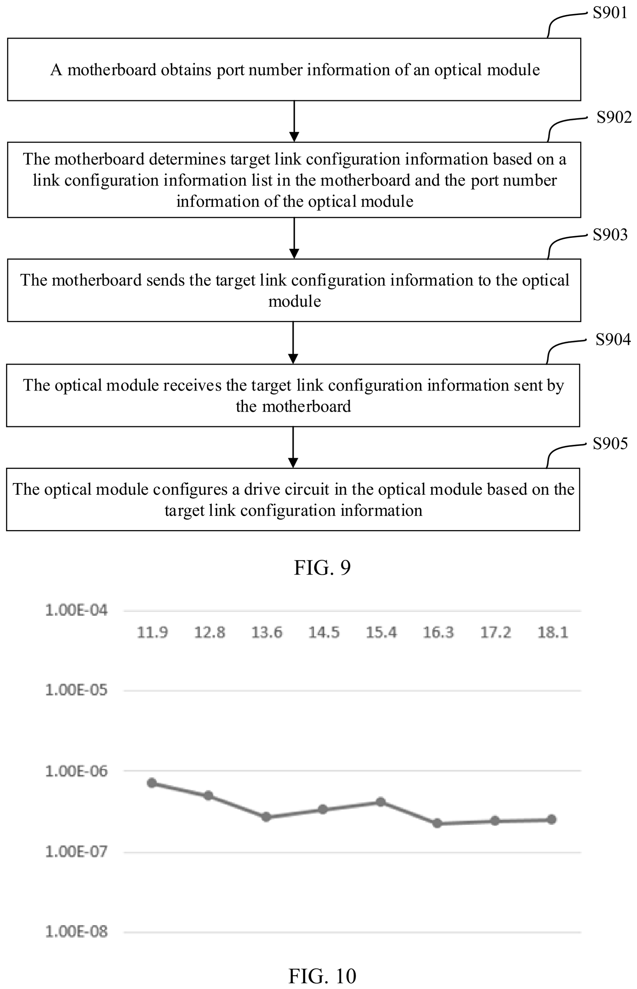

Based on the configuration system, an embodiment of this application further provides a configuration method for a drive circuit in an optical module shown in FIG. 9, applied to a configuration system. The configuration system includes a motherboard and the optical module. The optical module is connected to the motherboard through a port on the motherboard. The optical module includes an optical module without a digital signal processor disposed inside. As shown in FIG. 9, the method includes the following steps.

Step S901: The motherboard obtains port number information of the optical module.

Step S902: The motherboard determines target link configuration information based on a link configuration information list in the motherboard and the port number information of the optical module, where the link configuration information list includes port numbers of a plurality of ports on the motherboard and link configuration information of the plurality of ports.

Step S903: The motherboard sends the target link configuration information to the optical module.

Step S904: The optical module receives the target link configuration information sent by the motherboard.

Step S905: The optical module configures the drive circuit in the optical module based on the target link configuration information.

In a possible implementation, that the optical module configures the drive circuit in the optical module based on the target link configuration information includes: The optical module configures the drive circuit in the optical module based on the target link configuration information and drive circuit configuration information in the optical module. In this manner, the configured drive circuit not only can effectively compensate for a signal loss on a signal transmission link between the optical module and the motherboard, but also can meet configuration requirements of different optical modules for the drive circuit, thereby further improving quality of a communication signal transmitted between the motherboard and the optical module.

In a possible implementation, the link configuration information list further includes link numbers of a plurality of links corresponding to each of the plurality of ports, a filter configuration parameter corresponding to each of the plurality of links, and a signal loss of each link. Link configuration information of each link includes a difference between the signal loss of each link and the corresponding filter configuration parameter. In this manner, the link configuration information corresponding to each link can be efficiently determined for each link of each of the plurality of ports. In addition, the drive circuit configured based on the target link configuration information determined based on the link configuration information list can effectively compensate for a signal loss of each link between the optical module and the motherboard.

In a possible implementation, the motherboard includes a management circuit, the optical module includes a management circuit, the link configuration information list is set in the management circuit of the motherboard, and there is communication between the management circuit of the motherboard and the management circuit of the optical module. That the motherboard obtains the port number information of the optical module includes: The management circuit of the motherboard obtains the port number information of the optical module. That the motherboard determines the target link configuration information based on the link configuration information list in the motherboard and the port number information of the optical module includes: The management circuit of the motherboard determines the target link configuration information based on the link configuration information list and the port number information. That the motherboard sends the target link configuration information to the optical module includes: The management circuit of the motherboard sends the target link configuration information to the management circuit of the optical module. That the optical module receives the target link configuration information sent by the motherboard includes: The management circuit of the optical module receives the target link configuration information sent by the management circuit of the motherboard. That the optical module configures the drive circuit in the optical module based on the target link configuration information includes: The management circuit of the optical module configures the drive circuit in the optical module based on the target link configuration information. In this manner, the configuration method that needs to be separately performed by the optical module and the motherboard can be efficiently and automatically performed by using the management circuit of the optical module and the management circuit of the motherboard. In this way, a function of another circuit of the optical module is not affected, and signal transmission between the optical module and the motherboard is not affected.

It should be understood that specific implementations of the steps in the configuration method in this embodiment of this application may be implemented with reference to specific implementations in the configuration method in the foregoing embodiments of this application. Details are not described herein again.

According to this embodiment of this application, the link configuration information list that includes the port numbers of the plurality of ports on the motherboard and the link configuration information corresponding to the plurality of ports is preset in the motherboard. After obtaining the port number information of the port to which the optical module is connected, the motherboard may automatically determine, based on the port number information and the link configuration information list, the target link configuration information of the port to which the optical module is connected, and send the target link configuration information to the optical module. The optical module may automatically and standardly configure the drive circuit in the optical module. In this way, the drive circuit in the optical module does not need to be manually configured, thereby improving configuration efficiency of the drive circuit in the optical module, and reducing a likelihood of errors.

Based on the configuration methods shown in FIG. 6, FIG. 7, and FIG. 9 and the configuration system shown in FIG. 8, a transmitter and dispersion eye closure (Transmitter and Dispersion Eye Closure for PAM4, TDECQ) indicator (where the TDECQ is an important parameter for measuring quality of a PAM4 optical signal) and a bit error rate (Bit Error Rate, BER) indicator (where the BER is an indicator for measuring accuracy of signal transmission within a specified time period) may be used to evaluate signal quality and accuracy when there is a signal transmission service between the motherboard and the optical module in which the drive circuit has been configured.

Table 3 shows evaluation results of a TDECQ indicator and a BER indicator of an eight-channel optical module provided in embodiments of this application. Each of eight channels may correspond to one link. It may be learned from Table 3 that a difference between link configuration information and a difference between a filter configuration parameter of the drive circuit and a signal loss is small. If a bit error rate indicator BER@-5dBm in Table 3 is used as a vertical coordinate, and a signal loss of the eight channels is used as a horizontal coordinate, a change trend that is of the bit error rate and that is shown in FIG. 10 may be obtained. It may be learned from FIG. 10 that a change of the bit error rate indicator is stable within an allowed error range.

**Table 3: Evaluation result**

| | Filter configuration parameter of a Tx FIR filter | Signal loss of a link | Difference between a filter parameter and a signal loss | Link configuration information | TDECQ | BER@-5dBm |
|---|---|---|---|---|---|---|
| Link 1 | 7.7 | 11.9 | 4.2 | 4 | 1.6 | 7.00E-07 |
| Link 2 | 7.7 | 12.9 | 5.1 | 5 | 1.56 | 5.00E-07 |
| Link 3 | 7.7 | 13.6 | 5.9 | 6 | 1.46 | 2.70E-07 |
| Link 4 | 7.7 | 14.5 | 6.8 | 7 | 1.5 | 3.40E-07 |
| Link 5 | 7.7 | 15.4 | 7.7 | 7 | 1.7 | 4.10E-07 |
| Link 6 | 7.7 | 16.3 | 8.6 | 8 | 1.78 | 2.30E-07 |
| Link 7 | 7.7 | 17.2 | 9.5 | 9 | 1.6 | 2.40E-07 |
| Link 8 | 7.7 | 18.1 | 10.4 | 10 | 1.7 | 2.50E-07 |

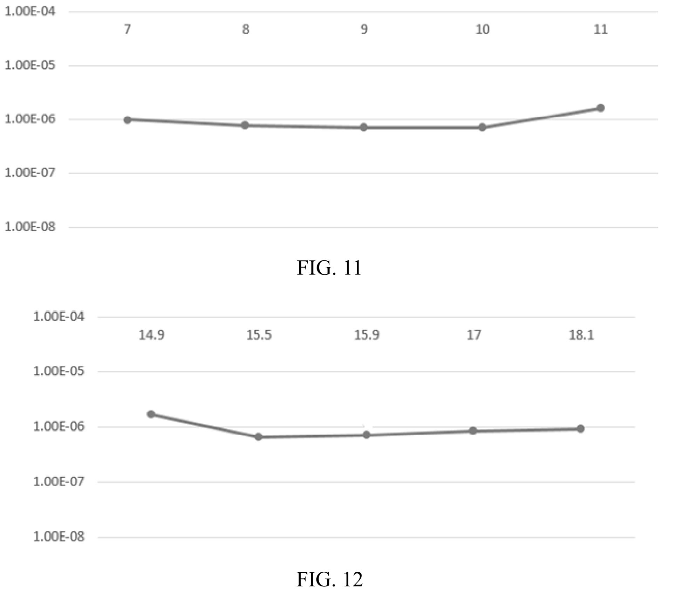

Table 4 shows evaluation results of a TDECQ indicator and a BER indicator when different link configuration information is configured for a same link for the drive circuit according to embodiments of this application. If a bit error rate indicator BER@-5dBm in Table 4 is used as a vertical coordinate, and link configuration information of the drive circuit is used as a horizontal coordinate, a change trend that is of the bit error rate and that is shown in FIG. 11 may be obtained. Based on the change trend that is of the bit error rate and that is shown in FIG. 11, it may be learned that the configuration system has a good tolerance for an error of the link configuration information of the drive circuit.

**Table 4: Evaluation result**

| | Filter configuration parameter of a Tx FIR filter | Signal loss of a link | Difference between a filter parameter and a signal loss | Link configuration information | TDECQ | BER@-5dBm |
|---|---|---|---|---|---|---|
| Link 1 | 7.7 | 15.9 | 8.2 | 7 | 2.5 | 9.70E-07 |
| Link 1 | 7.7 | 15.9 | 8.2 | 8 | 2.3 | 7.60E-07 |
| Link 1 | 7.7 | 15.9 | 8.2 | 9 | 2 | 6.90E-07 |
| Link 1 | 7.7 | 15.9 | 8.2 | 10 | 1.8 | 7.00E-07 |
| Link 1 | 7.7 | 15.9 | 8.2 | 11 | 1.8 | 1.60E-06 |

Table 5 shows evaluation results of a TDECQ indicator and a BER indicator when same link configuration information is configured for the drive circuit if different signal losses are generated for a same link according to embodiments of this application. If a bit error rate indicator BER@-5dBm in Table 5 is used as a vertical coordinate, and a recommended compensation parameter of the drive circuit is used as a horizontal coordinate, a change trend that is of the bit error rate and that is shown in FIG. 12 may be obtained. Based on the change trend that is of the bit error rate and that is shown in FIG. 12, it may be learned that, in a same piece of link configuration information, the system also has a good tolerance for an error of a signal loss of a same link.

**Table 5: Evaluation result**

| | Actual configuration parameter of Tx FIR | Link loss of a signal transmission link IL | Difference between Tx FIR and IL | Link configuration information | TDECQ | BER@-5dBm |
|---|---|---|---|---|---|---|
| Link 1 | 7.7 | 14.9 | 7.2 | 9 | 1.9 | 1.70E-06 |
| Link 1 | 7.7 | 15.5 | 7.8 | 9 | 1.8 | 6.30E-07 |
| Link 1 | 7.7 | 15.9 | 8.2 | 9 | 2 | 6.90E-07 |
| Link 1 | 7.7 | 17 | 9.2 | 9 | 2.2 | 8.50E-07 |
| Link 1 | 7.7 | 18.1 | 10.4 | 9 | 2.4 | 9.10E-07 |

An embodiment of this application provides a motherboard, including: a processing circuit, configured to perform signal transmission with an optical module through a plurality of links between a port to which the optical module is connected and the processing circuit; a management circuit, configured to: communicate with a management circuit of the optical module, and perform the configuration method performed by the motherboard; and a printed circuit board, configured to carry the processing circuit and the management circuit.

The management circuit may be a component such as an MCU or an EPLD having operation and storage capabilities. Optionally, the motherboard further includes a processing circuit. The processing circuit may include an integrated circuit such as an application-specific integrated circuit ASIC having a signal processing capability. There is a signal transmission service between the processing circuit and the optical module. It should be understood that a person skilled in the art may design, according to an actual requirement, a component carried on the motherboard. This is not limited in this embodiment of this application.

An embodiment of this application provides an optical module, including a drive circuit, a transmitter optical circuit, a receiver optical circuit, a signal amplification circuit, and a management circuit. The management circuit is configured to: communicate with a management circuit of a motherboard, and perform the configuration method that needs to be performed by the optical module. The drive circuit in the optical module includes an equalizer circuit configured to compensate for a link signal loss. The equalizer circuit may include, for example, a CTLE circuit. There is no DSP disposed inside the optical module. The optical module further includes, for example, a component such as a power supply. The optical module may be an electrically pluggable optical module without a DSP disposed inside, an onboard optical module without a DSP disposed inside, or the like.

It should be noted that the flowcharts and block diagrams in the accompanying drawings show possible implementations of system architectures, functions, and operations of systems, methods, and computer program products according to a plurality of embodiments of this application. In this regard, each block in the flowcharts or block diagrams may represent a module, a program segment, or a part of instructions, and the module, the program segment, or the part of the instructions includes one or more executable instructions for implementing a specified logical function. In some alternative implementations, a function marked in the block may alternatively occur in a sequence different from that marked in the accompanying drawings. For example, two consecutive blocks may actually be executed substantially in parallel, and may sometimes be executed in a reverse order, depending on a function involved.

It should also be noted that each block in the block diagrams and/or flowcharts, and a combination of blocks in the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

The foregoing has described embodiments of this application. The foregoing descriptions are examples, not exhaustive, and are not limited to the disclosed embodiments. Without departing from the scope of the described embodiments, many modifications and variations are apparent to a person of ordinary skill in the technical field. The selection of terms used in this specification is intended to best explain the principles of the embodiments, practical applications, or improvements to technologies in the market, or to enable another person of ordinary skill in the art to understand the embodiments disclosed in this specification.

## Claims

1. A configuration method for a drive circuit in an optical module, applied to a motherboard, wherein a port of the motherboard is connected to the optical module; and the method comprises:
obtaining port number information of the optical module;
determining target link configuration information based on a link configuration information list in the motherboard and the port number information of the optical module, wherein the link configuration information list comprises port numbers of a plurality of ports on the motherboard and link configuration information of the plurality of ports; and
sending the target link configuration information to the optical module, so that the optical module configures the drive circuit in the optical module based on the target link configuration information.

2. The method according to claim 1, wherein the link configuration information list further comprises link numbers of a plurality of links corresponding to each of the plurality of ports, a filter configuration parameter corresponding to each of the plurality of links, and a signal loss of each link, wherein link configuration information of each link comprises a difference between the signal loss of each link and the corresponding filter configuration parameter.

3. The method according to claim 1 or 2, wherein the link configuration information list is set in a management circuit of the motherboard, and there is communication between the management circuit of the motherboard and a management circuit of the optical module, wherein
determining the target link configuration information based on the link configuration information list in the motherboard and the port number information of the optical module comprises: determining, by the management circuit of the motherboard, the target link configuration information based on the link configuration information list and the port number information; and
sending the target link configuration information to the optical module comprises: sending, by the management circuit of the motherboard, the target link configuration information to the management circuit of the optical module.

4. The method according to claim 1 or 2, wherein obtaining the port number information of the optical module comprises:
obtaining an in-position signal sent by the port to which the optical module is connected, wherein the in-position signal indicates the port number information; or
determining, by polling the plurality of ports, port number information of the port to which the optical module is connected in the plurality of ports.

5. A configuration method for a drive circuit in an optical module, applied to the optical module, wherein the optical module is connected to a motherboard through a port on the motherboard; and the method comprises:
receiving target link configuration information sent by the motherboard, wherein the target link configuration information is determined by the motherboard based on port number information of the port to which the optical module is connected and a link configuration information list in the motherboard; and
configuring the drive circuit in the optical module based on the target link configuration information.

6. The method according to claim 5, wherein the method further comprises:
configuring the drive circuit in the optical module based on the target link configuration information and drive circuit configuration information in the optical module.

7. The method according to claim 5, wherein the optical module comprises a management circuit, and there is communication between the management circuit of the optical module and a management circuit of the motherboard, wherein
receiving the target link configuration information sent by the motherboard comprises: receiving, by the management circuit of the optical module, the target link configuration information sent by the motherboard; and
configuring the drive circuit in the optical module based on the target link configuration information comprises: configuring, by the management circuit of the optical module, the drive circuit in the optical module based on the target link configuration information.

8. The method according to any one of claims 5 to 7, wherein the link configuration information list comprises port numbers of a plurality of ports on the motherboard and link configuration information of the plurality of ports.

9. A configuration system for a drive circuit in an optical module, comprising:
a motherboard and the optical module, wherein the optical module is connected to the motherboard through a port on the motherboard;
the motherboard is configured to: obtain port number information of the optical module, determine target link configuration information based on a link configuration information list in the motherboard and the port number information of the optical module, and send the target link configuration information to the optical module, wherein the link configuration information list comprises port numbers of a plurality of ports on the motherboard and link configuration information of the plurality of ports; and
the optical module is configured to: receive the target link configuration information sent by the motherboard, and configure the drive circuit in the optical module based on the target link configuration information.

10. The system according to claim 9, wherein configuring the drive circuit in the optical module based on the target link configuration information comprises:
configuring the drive circuit in the optical module based on the target link configuration information and drive circuit configuration information in the optical module.

11. The system according to claim 9 or 10, wherein the link configuration information list further comprises link numbers of a plurality of links corresponding to each of the plurality of ports, a filter configuration parameter corresponding to each of the plurality of links, and a signal loss of each link, wherein link configuration information of each link comprises a difference between the signal loss of each link and the corresponding filter configuration parameter.

12. The system according to claim 9 or 10, wherein the motherboard comprises a management circuit, the optical module comprises a management circuit, the link configuration information list is set in the management circuit of the motherboard, and there is communication between the management circuit of the motherboard and the management circuit of the optical module, wherein
the management circuit of the motherboard is configured to: obtain the port number information of the optical module, determine the target link configuration information based on the link configuration information list in the motherboard and the port number information of the optical module, and send the target link configuration information to the optical module; and
the management circuit of the optical module is configured to: receive the target link configuration information sent by the management circuit of the motherboard, and configure the drive circuit in the optical module based on the target link configuration information.

13. A configuration method for a drive circuit in an optical module, applied to a configuration system, wherein the configuration system comprises a motherboard and the optical module, and the optical module is connected to the motherboard through a port on the motherboard; and the method comprises:
obtaining, by the motherboard, port number information of the optical module;
determining, by the motherboard, target link configuration information based on a link configuration information list in the motherboard and the port number information of the optical module, wherein the link configuration information list comprises port numbers of a plurality of ports on the motherboard and link configuration information of the plurality of ports;
sending, by the motherboard, the target link configuration information to the optical module;
receiving, by the optical module, the target link configuration information sent by the motherboard; and
configuring, by the optical module, the drive circuit in the optical module based on the target link configuration information.

14. The method according to claim 13, wherein configuring, by the optical module, the drive circuit in the optical module based on the target link configuration information comprises:
configuring, by the optical module, the drive circuit in the optical module based on the target link configuration information and drive circuit configuration information in the optical module.

15. The method according to claim 13 or 14, wherein the link configuration information list further comprises link numbers of a plurality of links corresponding to each of the plurality of ports, a filter configuration parameter corresponding to each of the plurality of links, and a signal loss of each link, wherein link configuration information of each link comprises a difference between the signal loss of each link and the corresponding filter configuration parameter.

16. The method according to claim 13 or 14, wherein the motherboard comprises a management circuit, the optical module comprises a management circuit, the link configuration information list is set in the management circuit of the motherboard, and there is communication between the management circuit of the motherboard and the management circuit of the optical module, wherein
obtaining, by the motherboard, the port number information of the optical module comprises: obtaining, by the management circuit of the motherboard, the port number information of the optical module;
determining, by the motherboard, the target link configuration information based on the link configuration information list in the motherboard and the port number information of the optical module comprises: determining, by the management circuit of the motherboard, the target link configuration information based on the link configuration information list and the port number information;
sending, by the motherboard, the target link configuration information to the optical module comprises: sending, by the management circuit of the motherboard, the target link configuration information to the management circuit of the optical module;
receiving, by the optical module, the target link configuration information sent by the motherboard comprises: receiving, by the management circuit of the optical module, the target link configuration information sent by the management circuit of the motherboard; and
configuring, by the optical module, the drive circuit in the optical module based on the target link configuration information comprises: configuring, by the management circuit of the optical module, the drive circuit in the optical module based on the target link configuration information.

17. A motherboard, comprising:
a processing circuit, configured to perform signal transmission with an optical module through a plurality of links between a port to which the optical module is connected and the processing circuit;
a management circuit, configured to: communicate with a management circuit of the optical module, and perform the method according to any one of claims 1 to 4; and
a printed circuit board, configured to carry the processing circuit and the management circuit.

18. An optical module, comprising a drive circuit, a transmitter optical circuit, a receiver optical circuit, a signal amplification circuit, and a management circuit, wherein the management circuit is configured to: communicate with a management circuit of a motherboard, and perform the method according to any one of claims 5 to 8.
